# FASCICULE DE BREVET EUROPEEN

(11) **EP 1 604 886 B1**
(45) Date de publication et mention de la délivrance du brevet: **17.10.2007**
(21) Numéro de dépôt: 05291237.5
(22) Date de dépôt: 08.06.2005
(51) Int. Cl.: B62D 25/16

(54) **Ensemble de carrosserie d'un véhicule automobile**
Kraftfahrzeugrahmenanordnung
Assembly of a chassis of a motor vehicle

(30) Priorité: 08.06.2004 FR 0406191
(43) Date de publication de la demande: 14.12.2005
(73) Titulaire: COMPAGNIE PLASTIC OMNIUM, 69007 Lyon (FR)
(72) Inventeur: André, Gérald, 01500 Amberieu en Bugey (FR); Cheron, Hugues, 01800 Meximieux (FR)
(74) Mandataire: Remy, Vincent Noel Paul

(56) Documents cités:
- EP-A- 1 251 284
- WO-A-02/22403

## Description

La présente invention concerne un ensemble de deux pièces de carrosserie d'un véhicule automobile devant être juxtaposées à affleurement l'une de l'autre.

On connaît, du document EP 1251284, un système d'assemblage entre une aile et une peau de pare-chocs qui assure la mise en référence précise de ces deux pièces l'une par rapport à l'autre. Ce système comprend un bord sur la peau de pare-chocs et un bord sur l'aile, destinés à prendre appui l'un contre l'autre, et une réglette d'assemblage.

Le bord de la peau de pare-chocs comporte des tenons tandis que le bord de l'aile est muni de fenêtres que les tenons traversent lorsque les deux bords sont en appui l'un contre l'autre.

La réglette d'assemblage s'applique contre le bord de l'aile, sur sa face opposée au bord de la peau de pare-chocs, et se solidarise aux tenons qui dépassent des fenêtres pour maintenir les deux bords l'un contre l'autre.

Ce mécanisme réunit l'aile et la peau de pare-chocs et assure le maintien d'un jeu nul ou constant entre ces pièces, ainsi que leur affleurement.

Selon les circonstances, les plots peuvent être issus de moulage avec l'aile ou rapportés sur celle-ci, en étant alors portés par exemple par une pièce-support encliquetée sur l'aile.

Mais pour fixer l'aile et la peau de pare-chocs sur le véhicule, il est nécessaire de recourir à des pièces supplémentaires nécessitant des fixations spécifiques dont on ne peut faire l'économie.

La présente invention vise à perfectionner le système rappelé ci-dessus pour assurer simultanément la mise à affleurement des deux pièces de carrosserie et leur fixation sur la structure du véhicule.

La présente invention a pour objet un ensemble de carrosserie comprenant :
- une première et une seconde pièces de carrosserie, chaque pièce de carrosserie comportant une face externe et un bord, les bords des deux pièces étant conformés de manière à pouvoir s'appliquer l'un contre l'autre dans une position de référence telle que les faces externes des deux pièces se trouvent à affleurement l'une de l'autre,
- un presseur apte à maintenir les deux bords appliqués l'un contre l'autre en position de référence,
caractérisé en ce que le presseur comprend deux portées réunies par des moyens de serrage, aptes à prendre en sandwich les deux bords appliqués l'un contre l'autre, l'une des portées étant munie de moyens de fixation à la structure d'un véhicule.

Dans un mode de réalisation particulier de l'invention, une première des portées est munie de plots tandis qu'une seconde des portées est conformée pour s'arrimer auxdits plots et serrer les deux bords des pièces de carrosserie, lesdits deux bords comportant des passages traversant pour les plots.

Les plots sont de préférence aptes à se rompre en cas de choc. Dans ce cas, on les désigne également plots « fusibles » et leur aptitude à se rompre permet de préserver les pièces de carrosserie en cas de choc.

Avantageusement, la seconde portée est conformée pour s'arrimer aux plots par déformation élastique. Ainsi, en cas de choc, la seconde portée peut se déformer à nouveau et se libérer des plots sans casser ni détruire les plots, permettant alors aux deux pièces de carrosserie de se désolidariser pour mieux supporter d'éventuels déplacements résultant du choc. En conséquence, l'intégralité de l'ensemble de carrosserie peut être préservé.

Dans un mode de réalisation particulier de l'invention, la première pièce comporte des saillies tandis que le bord de la seconde pièce comporte des logements dimensionnés et positionnés de manière qu'en position de référence des deux bords, les saillies s'emboîtent dans les logements et maintiennent les faces externes à affleurement l'une de l'autre.

Dans ce mode de réalisation, la mise en référence entre les deux pièces de carrosserie s'effectue directement entre les deux pièces, ce qui réduit les chaînes de cotes et le cumul des intervalles de tolérance. En outre, en plaçant les saillies et les logements à proximité des faces externes, et de préférence en augmentant leur nombre, on réduit davantage les intervalles de tolérance, ainsi que les risques de dilatation, de sorte qu'on améliore encore la mise à affleurement entre les faces externes des deux pièces.

Dans un mode de réalisation particulier de l'invention, les logements sont des ouvertures ménagées dans l'épaisseur du bord de la seconde pièce.

Ainsi, la réalisation des logements dans la seconde pièce s'effectue simplement en prévoyant des ouvertures qui peuvent être soit issues directement de moulage, soit obtenues lors d'une opération de reprise de la seconde pièce.

Lorsque les pièces sont en matière plastique, il est avantageux de réaliser les saillies et les ouvertures directement lors du moulage.

Dans un mode de réalisation particulier de l'invention, le bord de chaque pièce est sensiblement perpendiculaire à la face externe de la même pièce, ce qui correspond à un agencement classique du bord sur chaque pièce.

Dans un mode de réalisation particulier de l'invention, l'une des deux portées comporte des moyens d'encliquetage avec une des pièces de carrosserie, ce qui permet de la monter à l'avance sur cette première pièce de carrosserie, par exemple sur l'aile.

Afin de faciliter l'emboîtement des saillies dans les logements, dans un mode de réalisation particulier, une des portées du presseur comporte un moyen de retenue provisoire de la seconde pièce de carrosserie dans une position d'attente, dans laquelle les deux bords sont écartés mais chaque saillie se trouve au droit du logement correspondant, de sorte que l'emboîtement des saillies dans les logements résulte d'un simple rapprochement des deux bords selon une direction sensiblement perpendiculaire auxdits bords.

De manière classique, - les saillies respectivement les logements - ont une extrémité
- respectivement une embouchure - tronconique de centrage pour faciliter leur emboîtement.

Afin de mieux faire comprendre l'invention, on va en décrire maintenant un mode de réalisation donné uniquement à titre d'exemple non limitatif de la portée de l'invention, en référence aux dessins annexés dans lesquels :
- la figure 1 est une section transversale d'un ensemble selon l'invention,
- la figure 2 est une section transversale de l'ensemble de la figure 1 prise dans un autre plan,
- la figure 3 est une section analogue aux figures 1 et 2 prise dans un autre plan.

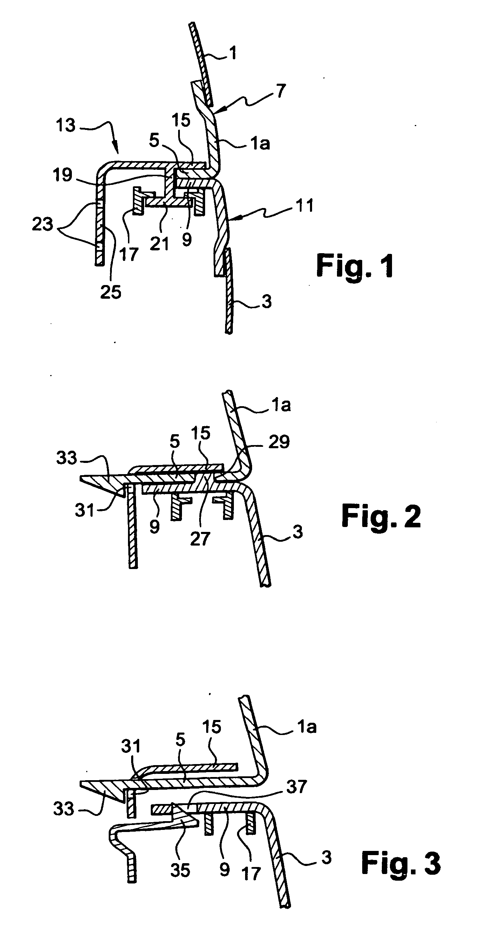

On a représenté sur la figure 1 une aile 1 et une peau de pare-chocs 2. L'aile est réalisée en matière plastique. Elle comporte une extrémité inférieure 1 a, un bord 5 et une face externe 7.

Un intérêt de recourir à de la matière plastique est de faciliter la réalisation de formes d'assemblage qui vont être décrites.

La peau de pare-chocs 3 est réalisée en matière plastique et comprend elle aussi un bord 9 et une face externe 11.

Les bords de l'aile 5 et 9 et de la peau de pare-chocs sont conformés de manière à pouvoir s'appliquer l'un contre l'autre dans une position de référence (visible sur les figures 1 et 2) dans laquelle les faces externes 7 et 11 de l'aile et de la peau de pare-chocs se trouvent à affleurement l'une de l'autre.

L'ensemble représenté comprend également un presseur 13 qui est constitué par une première portée 15 destinée à venir se placer au-dessus du bord 5 de l'aile et par une seconde portée 17 constituée par une réglette destinée à venir se placer en dessous du bord 9 de la peau de pare-chocs.

Les deux portées 15 et 17 prennent en sandwich les deux bords 5 et 9 appliqués l'un contre l'autre. La réglette, qui constitue la seconde portée, est réunie à la première portée 15 par des plots 19 à section en T solidaires de la première portée 15 et dont les têtes élargies 21 permettent l'arrimage de la réglette 17.

On voit, sur la figure 1, que lorsque la réglette 17 est en position sur les plots 19, les deux bords 5 et 9 de l'aile et de la peau de pare-chocs sont fermement maintenus l'un contre l'autre en étant serrés entre les deux portées du presseur.

Les plots 19 sont de préférence répartis de manière régulière le long de la première portée. Leur nombre sera déterminé par l'homme du métier en fonction de la forme des bords et des contraintes auxquelles ces derniers doivent être soumis lors de l'utilisation du véhicule.

Afin d'obtenir un positionnement précis entre l'aile et le pare-chocs, il est souhaitable de multiplier les plots en les rapprochant le plus possible les uns des autres afin de réaliser une liaison quasi continue entre la réglette 17 et le portée 15.

Comme on le voit sur le dessin, la première portée 15 est munie de moyens de fixation à la structure du véhicule. Dans l'exemple représenté, ces moyens sont des orifices traversants 23 destinés à des vis permettant le vissage d'une branche 25 de la première portée sur une pièce de structure du véhicule (non représentée) offrant une surface d'appui verticale.

Comme on le voit sur la figure 2, le bord 9 de la peau de pare-chocs comporte des saillies 27 dont la hauteur double sensiblement l'épaisseur du bord au niveau d'une saillie (par rapport à l'épaisseur du bord en dehors des saillies). Le bord 5 de l'aile comprend des ouvertures 29 ménagées dans son épaisseur. Chaque ouverture 29 délimite un logement apte à recevoir une saillie par emboîtement.

Les saillies 27 sont transversalement dimensionnées de manière à coïncider avec les ouvertures 29, afin que l'emboîtement des saillies dans les ouvertures impose précisément la position relative entre l'aile et la peau de pare-chocs.

Comme on le voit sur la figure 2, cette position dite position de référence, assure un affleurement optimal entre la face externe 7 de l'aile et la face externe 11 de la peau de pare-chocs.

Comme on le voit également sur la figure 2, la saillie 27 présente une forme légèrement tronconique qui assure son centrage dans l'ouverture 29 correspondante.

Par ailleurs, la première portée 15 comporte des moyens d'encliquetage avec l'aile 1, sous la forme d'un orifice 31 dans la branche 25 d'une patte d'encliquetage 33 sur l'aile.

Grâce à ces moyens d'encliquetage, 31, 33 la première portée 15 peut être pré-solidarisée à l'aile et apporté en même temps que l'aile sur le véhicule.

Comme l'illustre la figure 3, la première portée 15 comporte en outre un moyen de retenue provisoire du bord 9 de la peau de pare-chocs en regard du bord 5 de l'aile, dans une position d'attente dans laquelle chaque saillie 27 se trouve au droit du logement 29 correspondant mais leur emboîtement n'est pas réalisé. Dans cette position d'attente, les deux bords 5 et 9 sont écartés mais l'emboîtement des saillies dans les logements résulte d'un simple rapprochement des deux bords selon une direction sensiblement perpendiculaire auxdits bords, qui est la direction de serrage des deux bords par les deux portées 15 et 17 du presseur.

Le moyen de retenue provisoire illustré à la figure 3 est une patte d'encliquetage 35 sur la première portée et une ouverture d'encliquetage 37 sur le bord 9 de la peau de pare-chocs.

On comprend, sur la figure 3, qu'en déplaçant le bord de la peau de pare-chocs vers le haut de manière à l'appliquer contre le bord de l'aile, on emboîte les sailles dans les logements 29 et on place les deux bords 5 et 9 en position de référence. Il ne reste plus qu'à insérer la réglette sous la tête 21 des plots 19 pour maintenir les deux bords 5 et 9 dans leur position de référence, assurant ainsi un affleurement optimal des faces externes de l'aile et de la peau de pare-chocs.

Cet affleurement n'est pas sensible aux éventuels défauts dimensionnels du presseur car il est régit par les saillies et les logements qui sont portés directement par l'aile et la peau de pare-chocs. En outre, les sailles et les logements sont positionnés sur les bords à proximité des faces externes 7 et 11 de l'aile et de la peau de pare-chocs, de sorte qu'en cas de dilatation différentielle entre ces deux pièces, le décalage géométrique engendré demeure très réduit.

On notera que les plots 19 sont conformés pour ne pas rompre en cas de petits chocs, à faible vitesse, généralement désignés chocs-parking.

Cependant, les plots 19 sont conformés pour rompre à leur base lors de chocs à vitesse plus élevée, généralement désignés chocs-assurances. Les moyens d'encliquetage 31, 33 sont également aptes à être arrachés lors de tels chocs. Ainsi, lors d'un choc-assurance, on préserve les pièces de carrosserie 1, 3, celles-ci étant entraînées par le choc indépendamment l'une de l'autre.

## Revendications

1. Ensemble de carrosserie de véhicule automobile comprenant :
une première (3) et une seconde (1) pièces de carrosserie, chaque pièce de carrosserie comportant une face externe (11, 7) et un bord (9, 5), les bords des deux pièces étant conformés de manière à pouvoir s'appliquer l'un contre l'autre dans une position de référence telle que les faces externes des deux pièces se trouvent à affleurement l'une de l'autre,
un presseur (13) apte à maintenir les deux bords appliqués l'un contre l'autre en position de référence,
**caractérisé en ce que** le presseur comprend deux portées (15, 17) réunies par des moyens de serrage (19), aptes à prendre en sandwich les deux bords (5, 9) appliqués l'un contre l'autre, l'une des portées étant munie de moyens (23) de fixation à la structure d'un véhicule.

2. Ensemble selon la revendication 1, dans lequel une première (15) des portées est munie de plots (19) tandis qu'une seconde (17) des portées est conformée pour s'arrimer auxdits plots et serrer les deux bords (5, 9) des pièces de carrosserie, lesdits deux bords comportant des passages traversant pour les plots.

3. Ensemble selon la revendication 1 ou 2, dans lequel la seconde portée (17) est conformée pour s'arrimer aux plots (19) par déformation élastique.

4. Ensemble selon la revendication 2 ou 3, dans lequel les plots (19) sont aptes à se rompre en cas de choc.

5. Ensemble selon la revendication 1, 2, 3 ou 4 dans lequel le bord (9) de la première pièce (3) comporte des saillies (27) tandis que le bord (5) de la seconde pièce (1) comporte des logements (29) dimensionnés et positionnés de manière qu'en position de référence des deux bords, les saillies s'emboîtent dans les logements et maintiennent les faces externes (7, 11) à affleurement l'une de l'autre.

6. Ensemble selon la revendication 5, dans lequel les saillies (27) et les logements (29) se trouvent à proximité des faces externes.

7. Ensemble selon la revendication 5 ou 6, dans lequel les logements (29) sont des ouvertures ménagées dans l'épaisseur du bord (5) la seconde pièce (1).

8. Ensemble selon l'une des revendications 1 à 7, dans lequel le bord (5, 9) de chaque pièce est sensiblement perpendiculaire à la face externe (7, 11) de la même pièce.

9. Ensemble selon l'une des revendications 1 à 8 dans lequel l'une (15) des deux portées comporte des moyens (31, 33) d'encliquetage avec une (1) des pièces de carrosserie.

10. Ensemble selon la revendication 9, dans lequel ladite une (15) des portées du presseur comporte un moyen (35, 37) de retenue provisoire de l'autre (3) pièce de carrosserie dans une position d'attente, dans laquelle les deux bords sont écartés mais chaque saillie (27) se trouve au droit du logement (29) correspondant, de sorte que l'emboîtement des saillies dans les logements résulte d'un simple rapprochement des deux bords selon une direction sensiblement perpendiculaire auxdits bords.

## Claims

1. A motor vehicle bodywork assembly comprising:
first (3) and second (1) bodywork parts, each bodywork part having an outside face (11,7) and an edge (9, 5), the edges of the two parts being shaped in such a manner as to be capable of pressing against each other in a reference position such that the outside faces of the two parts lie flush with each other; and
a presser (13) suitable for holding the two edges pressed against each other in the reference position;
**characterized in that** the presser comprises two bearing surfaces (15, 17) that are united by clamping means (19), suitable for being sandwiched on the two edges (5, 9) pressed against each other, one of the bearing surfaces being provided with fastener means (23) for fastening to the structure of a vehicle.

2. An assembly according to claim 1, in which a first one (15) of the bearing surfaces is provided with studs (19), while a second one (17) of the bearing surfaces is shaped to hold said studs and clamp together the two edges (5, 9) of the bodywork part, said two edges having through passages for the studs.

3. An assembly according to claim 1 or 2, in which the second bearing surface (17) is shaped to hold the studs (19) by elastic deformation.

4. An assembly according to claim 2 or 3, in which the studs (19) are suitable for breaking in the event of an impact.

5. An assembly according to claim 1, 2, 3 or 4, in which the edge (9) of the first part (3) includes projections (21), while the edge (5) of the second part (1) includes housings (29) dimensioned and positioned in such a manner that when the two edges are in the reference position, the projections are engaged in the housings and hold the outside faces (7, 11) flush with each other.

6. An assembly according to claim 5, in which the projections (27) and the housings (29) are located in the proximity of the outside faces.

7. An assembly according to claim 5 or 6, in which the housings (29) are openings formed through the thickness of the edge (5) of the second part (1).

8. An assembly according to any one of claims 1 to 7, in which the edge (5. 9) of each part is substantially perpendicular to the outside face (7, 11) of the same part.

9. An assembly according to any one of claims 1 to 8, in which one (15) of the two bearing surfaces includes snap-fastener means (31, 33) for snap-fastening with one (1) of the bodywork parts.

10. An assembly according to claim 9, in which said one (15) of the bearing surfaces of the presser includes retaining means (35, 37) for temporarily retaining the other bodywork part in a ready position, in which the two edges are spaced apart, but each projection (27) lies in register with the corresponding housing (29), such that the projections are engaged in the housings merely by moving the two edges towards each other in a direction that is substantially perpendicular to said edges. structure of a vehicle.

## Patentansprüche

1. Anordnung einer Kraftfahrzeugkarosserie, wobei die Anordnung Folgendes umfasst:
ein erstes (3) und ein zweites (1) Karosserieteil, wobei jedes Karosserieteil eine äußere Fläche (11, 7) und einen Rand (9, 5) aufweist, wobei die Ränder der beiden Teile so gestaltet sind, dass sie in einer Bezugsposition dergestalt aneinander gebracht werden können, dass die äußeren Flächen der beiden Teile in einer Fluchtlinie zueinander stehen,
ein Andruckelement (13), das in der Lage ist, die beiden aneinander gebrachten Ränder in einer Referenzposition zu halten,
**dadurch gekennzeichnet, dass** das Andruckelement zwei Auflageelemente (15, 17) umfasst, die durch Klemmmittel (19) zusammengebracht werden, die in der Lage sind, die beiden Ränder (5, 9), die aneinander gebracht werden, zwischen sich aufzunehmen, wobei eines der Auflageelemente mit Mitteln (23) zum Befestigen an der Struktur eines Fahrzeugs versehen ist.

2. Anordnung nach Anspruch 1, in der ein erstes (15) der Auflageelemente mit Stützelementen (19) versehen ist, während ein zweites (17) der Auflageelemente so gestaltet ist, dass es an den Stützelementen zu liegen kommt und die beiden Ränder (5, 9) der Karosserieteile zusammenklemmt, wobei die beiden Ränder Durchlässe für die Stützelemente aufweisen.

3. Anordnung nach Anspruch 1 oder 2, in der das zweite Auflageelement (17) so gestaltet ist, dass es durch elastische Verformung an den Stützelementen (19) zu liegen kommt.

4. Anordnung nach Anspruch 2 oder 3, in der die Stützelemente (19) geeignet sind, im Falle eines Aufpralls zu zerbrechen.

5. Anordnung nach Anspruch 1, 2, 3 oder 4, in der der Rand (9) des ersten Teils (3) Vorsprünge (27) aufweist, während der Rand (5) des zweiten Teils (1) Aufnahmen (29) aufweist, die so dimensioniert und positioniert sind, dass die beiden Vorsprünge in der Referenzposition in die Aufnahmen eingreifen und die beiden äußeren zueinander fluchtenden Flächen (7, 17) halten.

6. Anordnung nach Anspruch 5, in der sich die Vorsprünge (27) und die Aufnahmen in der Nähe der äußeren Flächen befinden.

7. Anordnung nach Anspruch 5 oder 6, in der es sich bei den Aufnahmen (29) um Öffnungen handelt, die in der Dicke des Randes (5) des zweiten Teils (1) vorgesehen sind.

8. Anordnung nach einem der Ansprüche 1 bis 7, in der der Rand (5, 9) jedes Teils im Wesentlichen senkrecht zur äußeren Fläche (7, 11) desselben Teils steht.

9. Anordnung nach einem der Ansprüche 1 bis 8, in der eines (15) der beiden Auflageelemente Mittel (31, 33) zum Einrasten in eines (1) der Karosserieteile aufweist.

10. Anordnung nach Anspruch 9, in der das eine (15) der Auflageelemente des Andruckelements ein Mittel (35, 37) aufweist, um das andere Karosserieteil (3) provisorisch in einer Wartestellung zu halten, in der die beiden Ränder voneinander entfernt sind, sich jeder Vorsprung (27) jedoch senkrecht zur entsprechenden Aufnahme befindet, so dass das Eingreifen der Vorsprünge in die Aufnahmen durch ein einfaches Annähern der beiden Ränder in einer zu den Rändern im Wesentlichen senkrechten Richtung möglich ist.
